Europäisches Patentamt

European Patent Office

Office européen des brevets

(11) Veröffentlichungsnummer: **0 597 242 A1**

## EUROPÄISCHE PATENTANMELDUNG

(21) Anmeldenummer: **93116106.1**

(22) Anmeldetag: **06.10.93**

(51) Int. Cl.5: **B23P 21/00**, B62D 25/06, B23K 25/00

(30) Priorität: **13.10.92 DE 4234463**

(43) Veröffentlichungstag der Anmeldung:
**18.05.94 Patentblatt 94/20**

(84) Benannte Vertragsstaaten:
**AT BE CH DE DK ES FR GB IT LI NL PT SE**

(71) Anmelder: **Späth, Walter**
**Hardstrasse 8**
**D-78256 Steisslingen(DE)**

(72) Erfinder: **Späth, Walter**
**Hardstrasse 8**
**D-78256 Steisslingen(DE)**

(74) Vertreter: **Riebling, Peter, Dr.-Ing.,**
**Patentanwalt**
**Postfach 31 60**
**D-88113 Lindau (DE)**

(54) **Verfahren zur Hestellung eines Karosserie-Tragrahmens und ein nach dem Verfahren hergestellter Karosserierahmen.**

(57) Gegenstand der Erfindung ist ein Verfahren zur Herstellung eines Karosserie-Tragrahmens (Synecon-Frame) und ein nach diesem Verfahren hergestellter Karosserie-Tragrahmen (16; 17). Bei dem erfindungsgemäßen Tragrahmen ist die A-Säule (1) werkstoffeinstückig mit dem Dachlängsträger (2) verbunden und als durchgehendes Profilteil (1; 2) entsprechend in sich gebogen. Weitere Profilteile wie z. B. die B-Säule (4) und die A-Traversen (7; 8) sind über Fügestöße (11) mit diesem durchgehenden Profilteil (1; 2) verbunden. Diese Fügestöße (11) werden durch sowohl in dem durchgehenden Profilteil (1; 2) ausgebildeten Ausklinkungen (21) als auch durch Ausklinkungen (32) an den Enden der daran anschließenden Profilteile definiert. In der Elektronenstrahlschweißanlage durchläuft der Tragrahmen (16) mehrere Evakuierungskammern (1; 2) bis schließlich in der Schweißkammer (3) die exakt aufeinander abgestimmten Fügestöße (11) mittels einer vorzugsweisen numerischen freibewegbaren Elektronenstrahlkanone im Vakuum verschweißt werden. Der mit diesem Verfahren hergestellte Tragrahmen weist ein besonders vorteilhaftes dynamisches Verhalten auf, da dieser durchgehende Längsträger aufweist und diese mit Hilfe des Elektronenstrahlschweißens in einem sehr lokal begrenzten Bereich exakt mit den übrigen Tragrahmenprofilen verbunden sind.

FIG 1

EP 0 597 242 A1

Gegenstand der Erfindung ist ein Verfahren zur Herstellung eines Karosserie-Tragrahmens und ein nach diesem Verfahren hergestellter Karosserie-Tragrahmen.

Es ist bekannt, sogenannte Spaceframes herzustellen, die auch unter der Bezeichnung Spaceframetragwerk bekannt sind. Bei dem bekannten Karosserie-Tragrahmen ist die A-Säule ein getrenntes Teil von dem daran anschließenden Längsträger und dieser ist wiederum ein getrenntes Teil von der daran anschließenden C-Säule. Im übrigen ist der Dachlängstäger nicht durchlaufend beim Stand der Technik, sondern er ist wiederum aus zwei getrennten Teilen gebildet, in deren Zwischenraum die B-Säule anschließt.

Der Anschluß der einzelnen Profilteile erfolgt über sogenannte Knotenteile, es handelt sich hierbei um Gußknoten, die als gesonderte und fremde Teile nachträglich mit den genannten Teilen (A-Säule, Dachlängsträger, C-Säule und ggf. B-Säule) verbunden werden. Bei der Verwendung derartiger Gußknoten oder auch anderer Knotenteile besteht der wesentliche Nachteil, daß ein höheres Gewicht bei dem Karosserie-Tragrahmen in Kauf genommen werden muß, bei gleichzeitig teurer Herstellung der Gußknoten und insgesamt des Tragrahmens selbst.

Ferner besteht der Nachteil, daß wegen der Vielzahl der notwendigen Schweiß-Stoßstellen auch hierdurch die Herstellungskosten des bekannten Karosserie-Tragrahmens wesentlich erhöht werden. Im übrigen zeigt sich ein ungünstiges dynamisches Verhalten, insbesondere im Crash-Test oder bei einem Unfall, weil die über die genannten Schweißstellen an die genannten Profilkörper angeschlossenen Knotenverbinder als Fremdkörper anzusehen sind, die wegen ihrer hohen Eigensteifigkeit ein anderes Bruchverhalten als die daran anschließenden Profilträger haben. Außerdem besteht die Gefahr, daß der Bruch des Rahmens genau im Stoß stattfindet und zwar zwischen dem relativ steifen Knotenbauteil und dem daran sich anschließenden elastischen Profilteil, wie z. B. die A-Säule, der Dachlängsträger oder die C-Säule.

Ein derartiger Kombinationsaufbau ist im übrigen recyclingerschwerend, da es sich um unterschiedliche Werkstoffe handelt.

Der Erfindung liegt deshalb die Aufgabe zugrunde, den bekannten Karosserie-Tragrahmen so weiterzubilden, daß bei wesentlich geringeren und einfacheren Herstellungskosten ein niedrigeres Gewicht und ein verbessertes dynamisches Verhalten erreicht wird.

Zur Lösung der gestellten Aufgabe ist ein Verfahren nach der Erfindung dadurch gekennzeichnet, daß in einem ersten Verfahrensschritt die A-Säule mit dem Dachlängsträger als werkstoffeinstückiges Profilteil gebogen wird und daß dieses durchgehende Profilteil über Fügestöße mit den daran anschließenden weiteren Profilteilen verbunden wird.

Nach dem erfindungsgemäßen Verfahren ist also vorgesehen, daß die bisher verwendeten Knotenformteile entfallen und daß mindestens die A-Säule mit dem daran anschließenden Dachlängsträger ein einheitliches (werkstoffeinstückiges) Profilteil bildet, womit der vorher im Stand der Technik bekannte Nachteil vermieden wird, daß in diesem Bereich ein Knotenformteil verwendet werden muß. Damit ergeben sich in überraschender Weise wesentliche Vorteile, denn die durchlaufende A-Säule, die werkstoffeinstückig mit dem daran anschließenden Dachlängsträger verbunden ist, kann nun mit wesentlich geringerem Gewicht hergestellt werden, weil das Knotenformteil entfällt.

Dadurch entfallen auch wesentliche Verbindungsstöße, die beim Stand der Technik notwendig waren.

In einer Weiterbildung des vorliegenden Verfahrens ist es vorgesehen, daß nicht nur die A-Säule mit dem etwa fluchtend anschließenden Dachlängsträger ein werkstoffeinstückiges Teil bildet, sondern daß auch noch zusätzlich die C-Säule ein werkstoffeinstückiges Teil mit den vorher genannten beiden Tragteilen bildet.

Das heißt, es ergibt sich ein Karosserie-Tragrahmen nach der Erfindung, bei dem die A-Säule, der daran anschließende Dachlängsträger und die sich daran anschließende C-Säule ein werkstoffeinstückiges und in sich gebogenes Profilteil bilden.

Bei dieser Ausgestaltung des Karosserie-Tragrahmens werden noch weitere Herstellungskosten eingespart, weil erfindungsgemäß auch die C-Säule Teil des Dachlängsträgers und damit auch Teil der A-Säule ist und die genannten Teile ein einheitliches durchgehendes Profilteil bilden.

Diese Ausgestaltung hat wesentliche Vorteile in Bezug auf das dynamische Verhalten des Karosserie-Tragrahmens, weil der Karosserie-Tragrahmen somit das einstückige, dynamisch, relativ elastische Teil verformen kann, bei dem - im Gegensatz zum Stand der Technik - keine härteren Gußformteile mehr dazwischen geschaltet sind. Gleichzeitig wird damit das Gesamtgewicht des Karosserie-Tragrahmens reduziert und die gesamte Anordnung ist recycling-fähig, weil nur ein einheitliches Material für den gesamten Karosserie-Tragrahmen verwendet wird. Weiter ist wichtig, daß das durchgehende Profilteil nun eine Mehrfach-Aufgabe hat, nämlich Aufnahme der Windschutzscheibe, Aufnahme des Rückfensters, Aufnahme verschiedener Dachelemente, Aufnahme verschiedener Türelemente zwischen A-, B- und C-Säule. Hierzu werden im Profilteil unterschiedliche Flansche ausgebildet, die Anschläge für die vorher erwähnten Teile bilden.

Ferner werden Fugen und Nutkanäle zur Aufnahme der Türdichtungen und Türanschläge vorgesehen. Ferner können wasserführende Rinnen im Profilteil angeordnet werden. Gleichzeitig bilden Teilflächen des Profilteils auch sichtbare Karosserieflächen, so daß es als Designelement verwendet werden kann.

Wichtig ist also, daß die gesamten Teile werkstoffeinstückig durchgehend sind, wobei in einer ersten Ausführungsform mindestens die A-Säule mit dem Dachlängsträger ein werkstoffeinstückiges Teil bildet, während in der zweiten Ausführungsform die A-Säule mit dem Dachlängsträger und der daran anschließenden C-Säule ein werkstoffeinstückiges Teil bilden.

An die genannten Profilteile werden dann die entsprechenden Quertraversen oben und unten über entsprechende Fügestöße angeschlossen. Ein Fügestoß ist dadurch definiert, daß ein Knotenverbindungsteil entfällt und daß das daran anschließende Profil in einem Stoß angeschlossen wird, welcher Stoß als Eckstoß, Rundstoß oder Spitzstoß ausgebildet sein kann. Die weiteren erfindungsgemäßen Stoßverbindungen sind in Anspruch 15 dargestellt.

Zur Herstellung eines Fügestoßes gibt es eine Vielzahl von Möglichkeiten. Allen Fügestößen gemeinsam ist, daß die aneinanderstoßenden Profilträger, die in der Regel, jedoch nicht zwingend, als Hohlprofile ausgebildet sind, unmittelbar aneinander anstoßen und über eine Verbindungstechnik miteinander verbunden werden.

In einer bevorzugten Ausführungsform des Verfahrens ist es vorgesehen, die bekannten Strahlschweißverfahren anzuwenden wie z. B. Elektronenstrahl-Schweißen, Laser-Schweißen oder Plasma-Schweißen. D. h. Schweißverfahren, die ohne Schweißzusatzwerkstoffe auskommen und eine geringe Wärmeeinflußzone haben. Es handelt sich hierbei um hochenergetische Strahlfügeverfahren.

Als Verbindungstechnik werden nach dem erfindungsgemäßen Verfahren vor allem Schweißverfahren bevorzugt, wie z. B. Schmelzschweißen, als MIG-, WIG- oder TIG-Verfahren.

Neben den hier beschriebenen Schweißverbindungen kommen auch noch andere Verbindungen in Betracht, wie z. B. Klebeverbindungen, Schraubverbindungen, Nietverbindungen oder auch Warmpreßschweißverfahren, Abbrennstumpfschweißverfahren etc.

Nach der vorliegenden Erfindung wird vor allem das Elektronenstrahlschweißverfahren bevorzugt, weil es mit einer geringen Wärmebelastung am Fügestoß einhergeht und damit den gesamten Karosserie-Tragrahmen in seinem dynamischen Verhalten wenig verändert.

Aufgrund der begrenzten Wärmeeinflußzone wird das Festigkeitsverhalten des Werkstoffes nur unwesentlich beeinflußt, so daß das dynamische Belastungsverhalten des Karosserie-Tragrahmens optimal ist.

Als Material für die erfindungsgemäßen Profile werden bevorzugt Leichtmetall-Hohlprofile verwendet, bevorzugt Aluminium und seine Legierungen. Ebenso ist es möglich, die genannten Profilrohre aus Magnesium, Titanium oder Aluminium-Lithium oder sonstige Speziallegierungen auszubilden.

Im übrigen kann auch ein dünnwandiges, hochfestes Stahlprofil verwendet werden, wobei anstatt der geschlossenen Hohlprofilquerschnitte, die bei der Erfindung bevorzugt werden, auch teil-offene Profile jeglicher Zusammensetzung verwendet werden können.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Figur 1: schematisiert eine perspektivische Seitenansicht eines Karosserie-Tragrahmens nach der Erfindung in einer ersten Ausführungsform;

Figur 2: einen Karosserie-Tragrahmen in einer zweiten Ausführungsform;

Figur 3: Schnitt durch eine A-Säule mit Anschluß einer Tür und einem Dach oder einem Glasteil;

Figur 4: erste und zweite Ausführungsform eines Fügestoßes nach der Erfindung in Draufsicht;

Figur 5: die Seitenansicht des Stoßes nach Figur 4;

Figur 6: die Stirnansicht des Stoßes nach Figur 4;

Figur 7: ein drittes Ausführungsbeispiel eines Fügestoßes nach der Erfindung in Vorderansicht;

Figur 8: die Seitenansicht nach Figur 7;

Figur 9: die Stirnansicht nach Figur 7;

Figur 10: ein viertes Ausführungsbeispiel eines Fügestoßes in Vorderansicht als Stumpfstoß ohne Durchdringung des Nachbarteils;

Figur 11: die Seitenansicht des Stoßes nach Figur 10;

Figur 12:  die Stirnansicht des Stoßes nach Figur 10;

Figur 13:  eine Anlage zur Herstellung eines Karosserie-Tragrahmens nach der Erfindung;

Figur 14:  eine weitere Ausführungsform eines Karosserie-Tragrahmens bei einem offenen Fahrzeug.

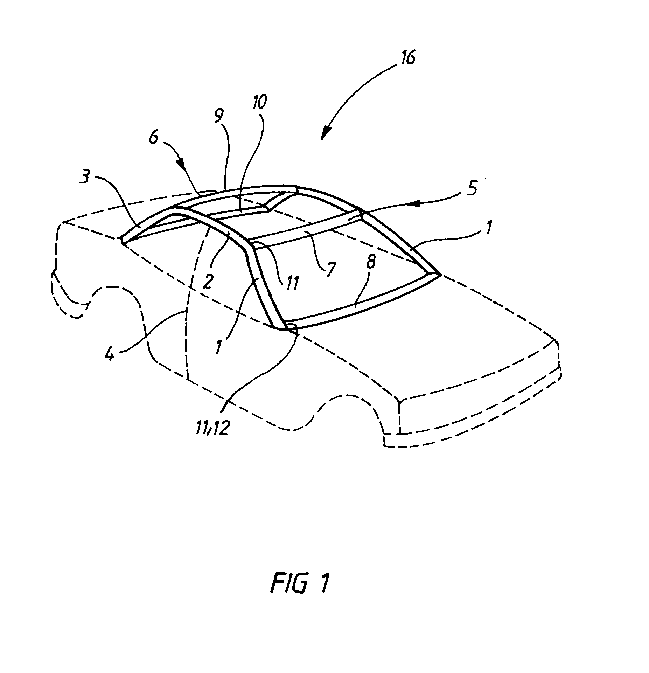

Bei dem Karosserie-Tragrahmen 16 nach Figur 1 bildet die A-Säule 1 ein werkstoffeinstückiges Teil mit dem Dachlängsträger 2 und dieser wiederum ein werkstoffeinstückiges Teil mit der C-Säule 3.

Die genannten Teile 1, 2, 3 sind also als durchlaufendes Biegeprofil ausgebildet. Die gegenüberliegende Seite des Karosserie-Tragrahmens 16 ist in gleicher Weise ausgebildet. Die beiden Profilteile 1, 2, 3 der beiden Fahrzeuglängsseiten sind jeweils durch quer verlaufende Teile miteinander verbunden. Der Dachrahmen vorne wird hierbei gebildet durch eine untere A-Traverse 8 und eine obere A-Traverse 7, welche Traversen 7, 8 über entsprechende Fügestöße 11 an den Profilteilen 1, 2 anschließen. Diese Fügestöße 11 sind bevorzugt als Winkelstöße 12 ausgebildet.

Der hintere Dachrahmen 6 besteht wiederum aus der oberen C-Traverse 9 und der unteren C-Traverse 10. Auch in diesem Bereich sind die Füge-Stöße 11 als Winkelstöße 12 ausgebildet. Im übrigen ist noch eine B-Säule 4 vorhanden, die über einen T-Stoß 3 an dem Dachlängsträger 2 ansetzt.

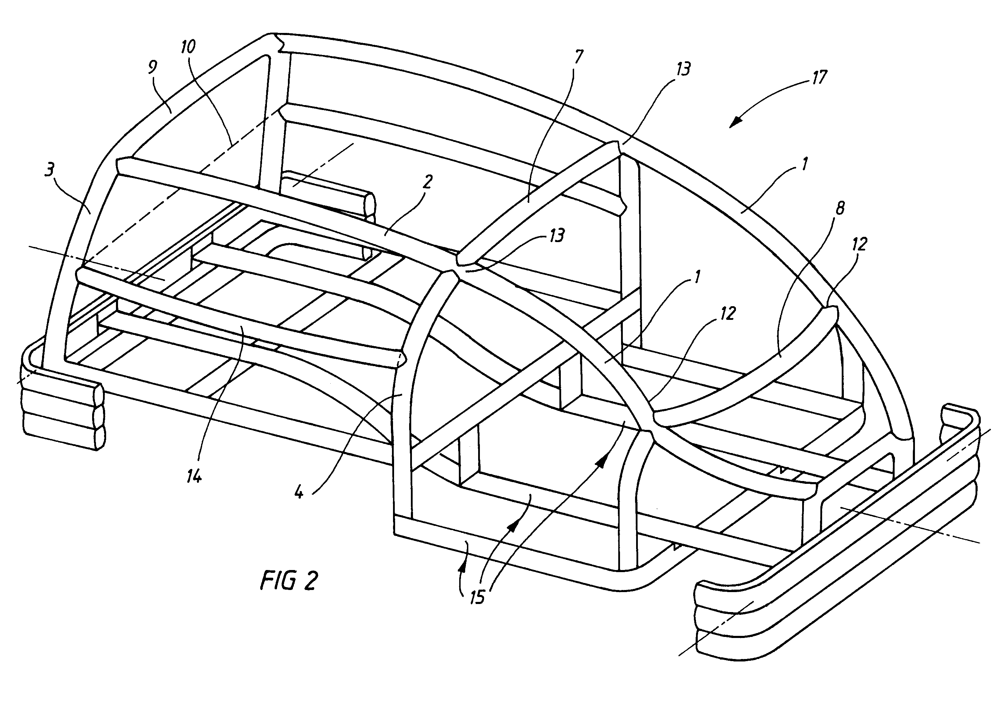

In Figur 2 ist ein weiteres Ausführungsbeispiel gezeigt, wo dargestellt ist, daß die A-Säule 1 mit dem Dachlängsträger 2 ein durchgehendes, einheitliches Profil bildet, während die C-Säule 3 werkstoffeinstückig mit der oberen C-Traverse 9 ausgebildet ist und somit einen durchgehenden, hinteren Rahmen bildet. Bei diesem Ausführungsbeispiel schließen wiederum die Quertraversen 7, 8 und 9, 10 über entsprechende Kreuz- bzw. T-Stöße 13 an den zugeordneten, längsverlaufenden Profilteilen an.

Es kann im übrigen vorgesehen sein, daß parallel zu dem Dachlängsträger noch eine oder mehrere Längstraversen 14 verlaufen, die über entsprechende Fügestöße an den senkrecht hierzu verlaufenden Profilteilen anschließen.

Der gesamte Karosserie-Tragrahmen 17 ist auf einem Chassis-Rahmen 15 aufgebaut, der in gleicher Weise ausgestaltet sein kann. Der Anschluß erfolgt ebenfalls über die genannten Fügestöße.

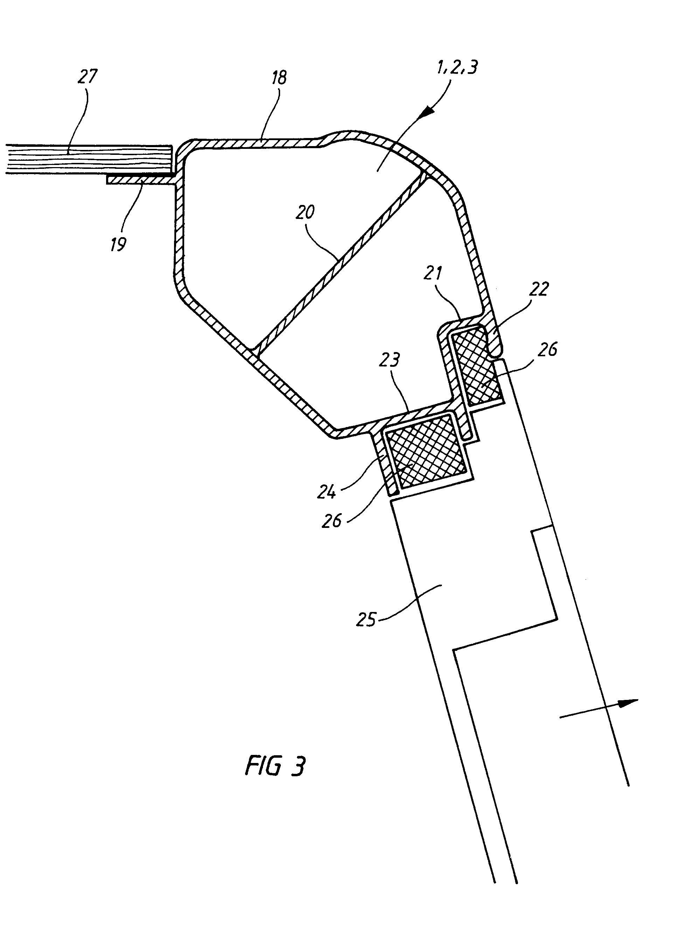

Figur 3 zeigt als Ausführungsbeispiel ein Profilteil, welches als A-Säule, Dachlängsträger oder C-Säule ausgebildet sein kann. Dieses Profil 18 weist einen seitlichen Flansch 19 auf, an den eine Anschlußfläche 27 anschließt, die z. B. als Dachfläche oder als Glasfläche ausgebildet ist.

Das Hohlprofil 18 weist im übrigen zur Versteifung eine Zwischenwand 20 auf. Um eine Tür 25 anzuschließen, sind Dichtungen 26 in zugeordnete Nuten 21, 23 eingebracht, wobei die Nuten jeweils seitliche Anschläge 22, 24 bilden.

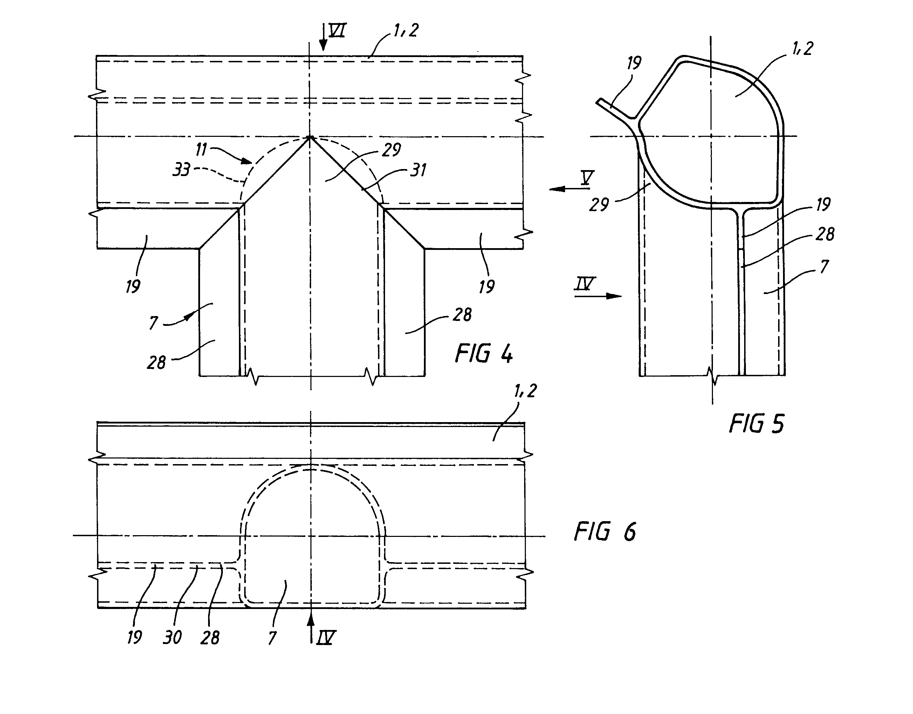

In den Figuren 4 bis 6 ist eine erste Ausführungsform eines Fügestoßes dargestellt, wobei der Anschluß eines Profilteils 1, 2 an einer zugeordneten A-Traverse 7 dargestellt ist. Hierbei weist die A-Traverse 7 seitliche Flansche 28 auf und in einer ersten Ausführungsform (in durchgezogenen Linien) ist gezeigt, daß der Fügestoß 11 dadurch ausgebildet ist, daß die A-Traverse 7 eine Ausklinkung 29 in positiver Form aufweist, der eine zugeordnete negative, paßgenaue Ausklinkung in dem Profilteil 1, 2 zugeordnet ist. Die Ausklinkung 29 greift in die Ausklinkung 31 des Profilteils 1, 2 hinein, so daß die beiden Teile eine homogene Kontaktfläche erhalten, in deren Bereich dann die vorstehend beschriebenen Verbindungstechniken angewendet werden.

Als zweite Ausführungsform ist dargestellt, daß die etwa spitzwinklig verlaufende Ausklinkung 29 in dem Profilteil 7 als Gehrungsausklinkung rundprofiliert ausgebildet ist und somit den Fügestoß 33 bildet.

Die beiden rechtwinklig aneinanderstoßenden Flansche 19, 28 sind so gestaltet, daß sie ineinander überlaufen, wobei auch im Stoßbereich dieser Flansche die vorher erwähnten Verbindungsverfahren angewendet werden.

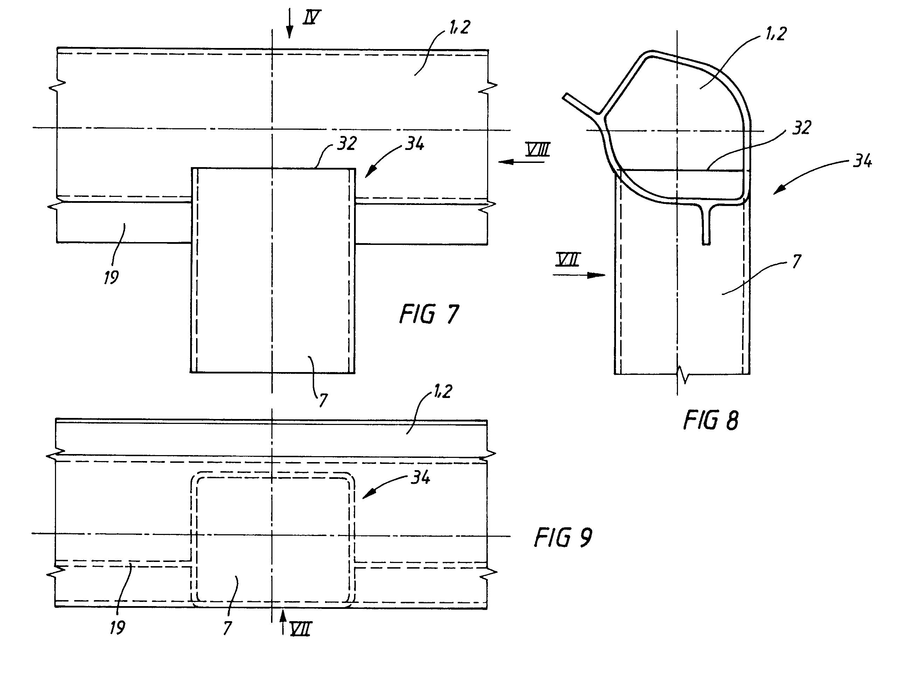

In den Figuren 7 bis 9 ist ein weiterer Fügestoß 34 dargestellt, wobei eine rechteckförmige Ausklinkung 32 in dem Profilteil 7 (A-Traverse oben) ausgebildet ist, die in eine zugeordnete Ausklinkung in den Profilteil 1, 2 eingreift.

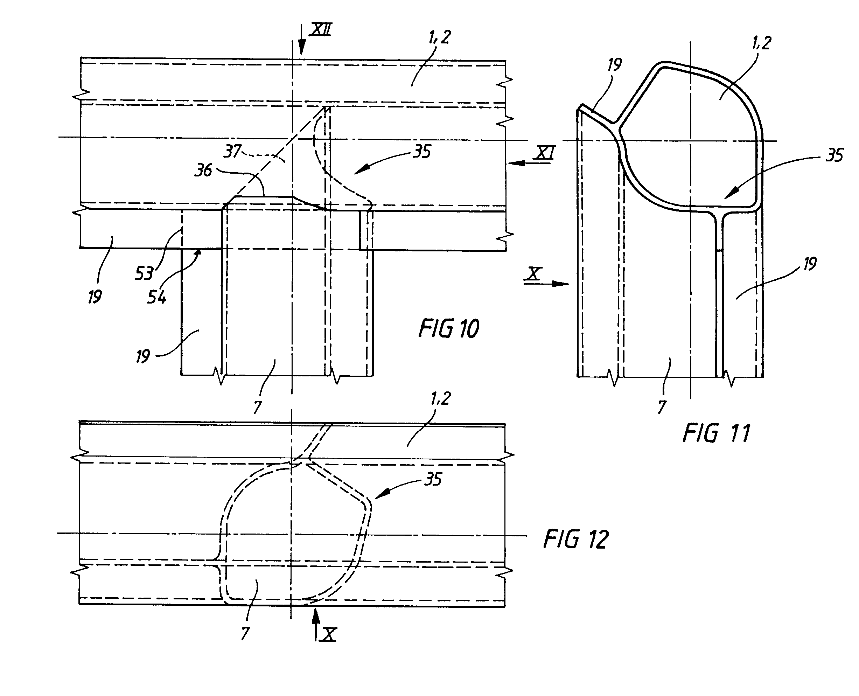

In den Figuren 10 bis 12 ist ein weiterer Fügestoß 35 dargestellt, wobei hier wesentlich ist, daß das Profilteil 7 gleich profiliert ist, wie das Profilteil 1, 2, so daß die beiden Profile identisch ausgebildet sind. Dies bedingt, daß die Ausklinkung 36 dem asymmetrischen Profil angepaßt ist, wobei auf der Rückseite des Profils gemäß Figur 10 ein spitzwinkliger Ansatz 37 unter das Profil 1, 2 greift.

Auch hier ist wesentlich, daß die beiden Flansche aneinander anschließen, wobei der Anschluß entweder gemäß Figur 10 ausgeführt sein kann, wie es in durchgezogenen Linien dargestellt ist oder es kann in einer anderen Ausführungsform das von unten kommende Flanschteil 19 sich in dem Flanschteil 53 nach oben fortsetzen, wobei dann das Flanschteil 54 von dem seitlich anstoßenden Flansch 19 entfällt.

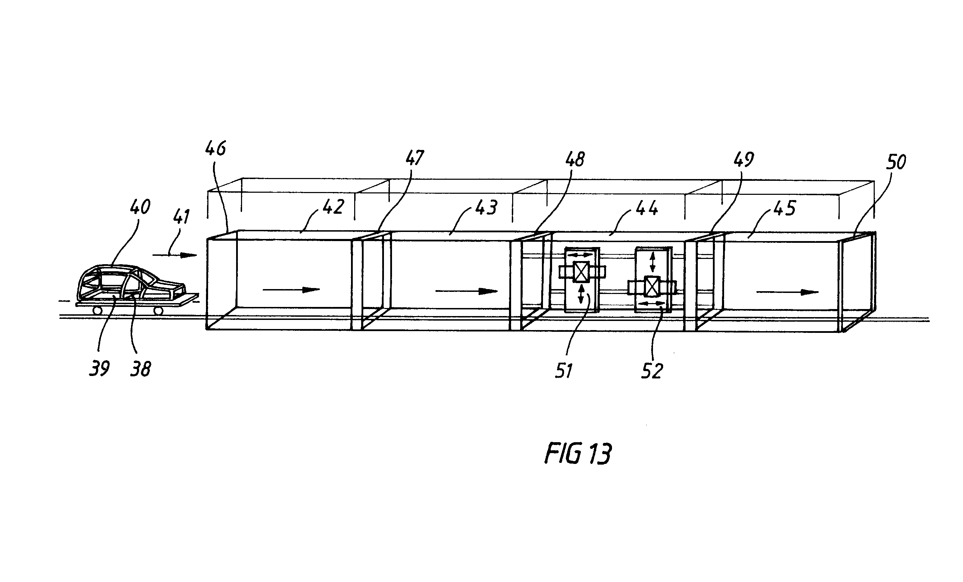

In Figur 13 ist die verfahrensmäßige Herstellung des Karosserie-Tragrahmens 16, 17 nach der Erfindung näher dargestellt.

Der Rahmen 40 wird durch eine nicht näher dargestellte Montagelehre 38 zusammengehalten und ruht auf einer verfahrbaren Plattform 39, die in Pfeilrichtung 41 in die Anlage einfahrbar ist. Die Anlage dient zum Verbinden der Fügestöße 11, 33, 34, 35 mittels Elektronenstrahlschweißverfahren. Nachdem ein derartiges Schweißverfahren im wesentlichen nur im Vakuum anwendbar ist, sind eine Reihe von Kammern 42-45 vorgesehen, die voneinander durch entsprechende Schleusen 46-50 abgeteilt sind.

In der Kammer 46 wird ein Vorvakuum zwischen den beiden Schleusen 46, 47 erzeugt, wonach dann die Plattform 39 in die Kammer 43 gefahren wird, wo das Vakuum zwischen den Schleusen 47 und 48 erhöht wird.

Nach dem Einfahren in die Kammer 44 werden die Fügestöße mittels Elektronenstrahlschweißverfahren verbunden, wobei eine oder mehrere Schweißstationen 51, 52 im Vakuum in der Kammer 44 arbeiten. Diese Schweißstationen 51, 52 sind als Elektronenstrahlkanonen ausgebildet und sind in beliebigen Richtungen verfahrbar, um die entsprechenden Fügestöße miteinander zu verbinden.

Nach der Verbindung der einzelnen Profilteile des Rahmens 40 wird die Plattform in die Kammer 45 gefahren, wo das Vakuum langsam belüftet wird, so daß der aus der Schleuse 50 gefahrene Rahmen 40 dann fertig hergestellt ist. Es handelt sich also um ein Durchlaufverfahren, welches auch für Serienfertigungen geeignet ist.

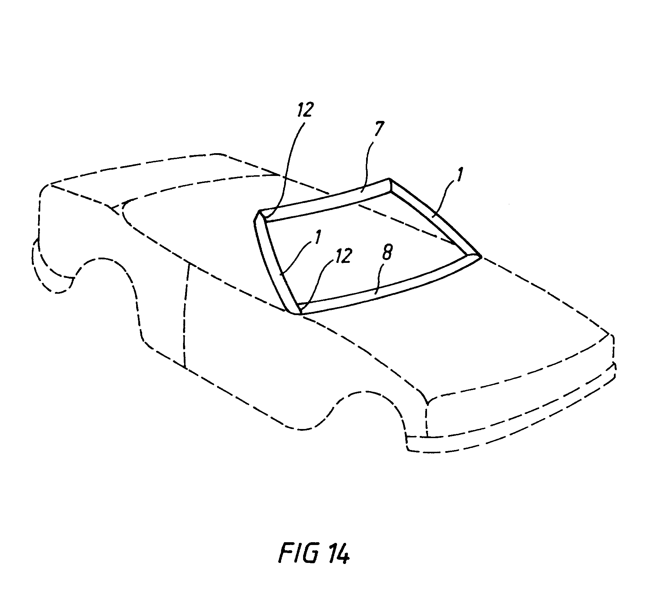

In der Figur 14 ist als weiteres Ausführungsbeispiel der Erfindung dargestellt, daß die A-Säule 1 ohne Zwischenschaltung von Knotenformteilen über die genannten Fügestöße direkt mit der oberen und der unten A-Traverse 7, 8 verbunden ist.

Das erfindungsgemäße Verfahren kann für alle leichten Rahmentragwerke zum Einsatz kommen, nämlich im Chassisbereich für PKW, im Schienenfahrzeugbau, sämtliche Arten von Fahrgasträumen, wie auch im Flugzeug, Omnibusbau, Kabinen für Seilbahnen und dgl.

| ZEICHNUNGSLEGENDE | | | |
|---|---|---|---|
| 1 | A-Säule | 28 | Flansch |
| 2 | Dachlängsträger | 29 | Ausklinkung (Gehrung) |
| 3 | C-Säule | 30 | Stoßstelle |
| 4 | B-Säule | 31 | Ausklinkung (Längsträger 1,2) |
| 5 | Dachrahmen (vorne) | 32 | Ausklinkung (Rechteck) |
| 6 | Dachrahmen (hinten) | 33 | Fügestoß |
| 7 | A-Traverse oben | 34 | Fügestoß |
| 8 | A-Traverse unten | 35 | Fügestoß |
| 9 | C-Traverse oben | 36 | Ausklinkung |
| 10 | C-Traverse unten | 37 | Ansatz |
| 11 | Fügestoß | 38 | Montagelehre |
| 12 | Winkelstoß | 39 | Plattform |
| 13 | Kreuzstoß | 40 | Rahmen |
| 14 | Längstraverse | 41 | Pfeilrichtung |
| 15 | Chassis-Rahmen | 42 | Kammer 1 |
| 16 | Karosserie-Tragrahmen | 43 | Kammer 2 |
| 17 | Karosserie-Tragrahmen | 44 | Kammer 3 |
| 18 | Profil | 45 | Kammer 4 |
| 19 | Flansch | 46 | Schleuse 1 |
| 20 | Zwischenwand | 47 | Schleuse 1 |
| 21 | Nut | 48 | Schleuse 2 |
| 22 | Anschlag | 49 | Schleuse 3 |
| 23 | Nut | 50 | Schleuse 4 |
| 24 | Anschlag | 51 | Schweißstation |
| 25 | Tür | 52 | Schweißstation |
| 26 | Dichtung | 53 | Flanschteil |
| 27 | Anschlußfläche | 54 | Flanschteil |

**Patentansprüche**

1. Verfahren zur Herstellung eines Karosserie-Tragrahmens mit folgenden Verfahrensschritten:
   a) Ablängen der einzelnen Tragrahmenprofile;
   b) Umformen der einzelnen Tragrahmenprofile in ihre endgültige, einbaufertige Form einschließlich spanabhebende Bearbeitung für die Fügestöße;

c) Aufspannen der einzelnen Tragrahmenprofile auf eine Montagelehre;

d) Zusammenfügen der einzelnen Tragrahmenprofile,

**dadurch gekennzeichnet,** daß

e) in Weiterbildung der Verfahrensschritte a) und b) die A-Säule (1) zusammen mit dem Dachlängsträger (2) als werkstoffeinstückiges Profilteil (1, 2) gebogen wird und

f) in Weiterbildung des Verfahrensschrittes d) dieses Profilteil (1, 2) über Fügestöße (11) mit den daran anschließenden Tragrahmenprofilen (3; 4; 7; 8; 9; 10) verbunden wird.

2. Verfahren nach Anspruch 1, **dadurch gekennzeichnet,** daß die A-Säule (1) zusammen mit dem Dachlängsträger (2) und der C-Säule (3) als werkstoffeinstückiges Profilteil (1, 2, 3) gebogen wird.

3. Verfahren nach Anspruch 2, **dadurch gekennzeichnet,** daß in dem Profil (1, 2, 3) Ausklinkungen (31) ausgebildet werden, welche den an dem Ende der anschließenden Tragrahmenprofile ausgebildeten Ausklinkungen (32) derart entsprechen, daß die aneinandergesetzten Tragrahmenprofile (1, 2, 3; 4) einen Fügestoß (11) mit gemeinsamer Verschneidungskurve bilden (Durchdringungsstoß).

4. Verfahren nach Anspruch 2**, dadurch gekennzeichnet,** daß die zu verbindenden Tragwerksprofile entlang der Fügestöße (11) mittels Schmelz-Schweißen, Laser-, Abbrennstumpf- oder Plasma-Schweißen oder Löten oder Kleben oder Nieten oder Verschrauben miteinander verbunden werden.

5. Verfahren nach Anspruch 4, **dadurch gekennzeichnet,** daß die Fügestöße (11) mit einem Elektronenstrahlschweißverfahren miteinander verbunden werden, bei dem diese der Reihe nach eine Vorevakuierungskammer (42), eine Evakuierungskammer (43), eine oder mehrere Schweißkammern (44) und schließlich eine oder mehrere Belüftungskammern (45) durchlaufen.

6. Verfahren nach Anspruch 5, **dadurch gekennzeichnet,** daß die gesamte Montagelehre (38) zusammen mit den vorbereiteten und vormontierten Tragrahmenprofilen mittels einer fahrbaren Plattform (39) durch die in Fahrtrichtung (41) hintereinander angeordneten Kammern (42; 43; 44; 45) befördert wird.

7. Verfahren nach Anspruch 6, **dadurch gekennzeichnet,** daß mindestens eine Plattform (39) im Durchlaufverfahren mit quasi-stationärem Taktbetrieb die einzelnen Kammern (42; 43; 44; 45) durchläuft.

8. Verfahren nach Anspruch 6, **dadurch gekennzeichnet,** daß die Kammern (42, 43, 44, 45) jeweils durch Schleusen (46; 47; 48; 49; 50), welche beim Durchlauf der Plattform (39) entsprechend geöffnet und wieder geschlossen werden, luftdicht oder implosionsdicht abgeschlossen sind.

9. Verfahren nach Anspruch 5, **dadurch gekennzeichnet,** daß in der Schweißkammer (44) ein Vakuum erzeugt wird und mindestens eine Schweißstation (51) mit einer Elektronenstrahlkanone vorgesehen ist, welche in beliebige Richtungen verfahren wird, um die Fügestöße (11) miteinander zu verbinden.

10. Verfahren nach Anspruch 9, **dadurch gekennzeichnet,** daß die Bewegung der Schweißkanone frei programmierbar ist.

11. Karosserie-Tragrahmen, der nach dem in Anspruch 1 beschriebenen Verfahren hergestellt ist, mit einem zur Längsachse symmetrischen Aufbau aus einzelnen, gebogenen Tragrahmenprofilen, welche als A-Säule (1), B-Säule (4), C-Säule (3), Dachlängsträger (2), untere A-Traverse (8), obere A-Traverse (7), obere C-Traverse (9) und untere C-Traverse (10) ausgebildet sind und die gegebenenfalls eine zusätzliche B-Traverse aufweisen, **dadurch gekennzeichnet,** daß

- mindestens die A-Säule (1) und der Dachlängsträger (2) als ein werkstoffeinstückiges Profilteil (1, 2) ausgebildet ist und

- dieses durchgehende Profilteil (1, 2) über Fügestöße (11) mit den daran anschließenden Profilteilen (3; 4; 7; 8; 9; 10) verbunden ist.

12. Tragrahmen nach Anspruch 11, **dadurch gekennzeichnet,** daß die A-Säule (1) und der Dachlängsträger (2) und die C-Säule (3) als ein werkstoffeinstückiges in sich gebogenes Profilteil (1; 2, 3) ausgebildet sind.

**13.** Tragrahmen nach Anspruch 11, **dadurch gekennzeichnet,** daß an den Fügestößen (11) die miteinander zu verbindenden Tragrahmenprofile (3; 4; 7; 8; 9; 10) unmittelbar aneinanderstoßen und mittels einer Verbindungstechnik miteinander verbindbar sind.

**14.** Tragrahmen nach Anspruch 13, **dadurch gekennzeichnet,** daß sowohl durch die Ausklinkungen (31) in dem durchgehenden Profilteil (1, 2) als auch durch diejenigen an den Enden der Profilteile (32) die Fügestöße (11) definiert sind, wobei die Ausklinkungen (31; 32) des gleichen Fügestoßes (11) eine gemeinsame Verschneidungskurve aufweisen.

**15.** Tragrahmen nach Anspruch 14, **dadurch gekennzeichnet,** daß die Fügestöße (11) geometrisch frei wählbar sind, z. B. als Durchdringungsstöße, nämlich Gehrungsstöße, Halbrundstoß, Rechteckstoß oder Stumpfstöße oder als Eck-, Rund- oder Spitzstöße ausgebildet sind.

**16.** Tragrahmen nach Anspruch 11, **dadurch gekennzeichnet,** daß zumindest das werkstoffeinstückige Profilteil (1, 2) einen seitlichen Flansch (19) aufweist.

**17.** Karosserie-Tragrahmen der nach dem in Anspruch 1 beschriebenen Verfahren hergestellt ist, mit einem zur Längsachse symmetrischen Aufbau aus einzelnen, gebogenen Tragwerkprofilen, welche als A-Säule (1), untere A-Traverse (8) und obere A-Traverse (7) ausgebildet sind, **dadurch gekennzeichnet,** daß die A-Säule (1) jeweils über Fügestöße (11) mit den daran anschließenden unteren und oberen A-Traversen (8, 7) verbunden ist.

FIG 1

FIG 2

FIG 3

FIG 4

FIG 5

FIG 6

FIG 8

FIG 7

FIG 9

FIG 10

FIG 11

FIG 12

EP 0 597 242 A1

FIG 13

EP 0 597 242 A1

FIG 14

| | **EINSCHLÄGIGE DOKUMENTE** | | EP 93116106.1 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
| Y | US - A - 5 096 254 (SPARKE) * Anspruch 1; Spalte 3, Zeilen 15-21; Fig. 1,5,6 * | 1,2, 11-13 | B 23 P 21/00 B 62 D 25/06 B 23 K 25/00 |
| A | | 4,17 | |
| Y | DE - A - 1 955 058 (AUDI-NSU AUTO UNION) * Anspruch 1; Fig. 1 * | 1,2, 11-13 | |
| A | | 16 | |
| A | US - A - 2 389 907 (HELMUTH) * Anspruch 4; Fig. 4,11 * | 3,14 | |
| A | DE - C - 2 742 938 (KAWASAKI JUKOGYO K.K.) * Ansprüche 1-6; Fig. 1-3 * | 5,8-10 | |
| A | US - A - 5 079 822 (ARAI et al.) * Ansprüche 1-3; Fig. 10,11 * | 6,7 | RECHERCHIERTE SACHGEBIETE (Int. Cl.⁵) B 23 P 11/00 B 23 P 19/00 B 23 P 21/00 B 62 D 25/00 B 23 K 15/00 |

Der vorliegende Recherchenbericht wurde für alle Patentansprüche erstellt.

| Recherchenort | Abschlußdatum der Recherche | Prüfer |
|---|---|---|
| WIEN | 13-12-1993 | BISTRICH |